# EUROPÄISCHE PATENTSCHRIFT

(11) **EP 2 152 465 B1**
(45) Veröffentlichungstag und Bekanntmachung des Hinweises auf die Patenterteilung: **29.06.2016**
(21) Anmeldenummer: 08734485.9
(22) Anmeldetag: 18.04.2008
(51) Int. Cl.: B23K 26/70, B23K 26/14

(54) **ANORDNUNG ZUR ERKENNUNG EINER LASERBEARBEITUNGSDÜSE BEIM EINSETZEN DER LASERBEARBEITUNGSDÜSE IN EINEN LASERBEARBEITUNGSKOPF**
ARRANGEMENT FOR RECOGNIZING A LASER MACHINING NOZZLE WHEN INSERTING THE LASER MACHINING NOZZLE IN A LASER MACHINING HEAD
ENSEMBLE PRÉVU POUR RECONNAÎTRE UNE BUSE D'USINAGE LASER LORSQUE LA BUSE D'USINAGE LASER EST INTRODUITE DANS UNE TÊTE D'USINAGE LASER

(30) Priorität: 23.05.2007 DE 102007024288
(43) Veröffentlichungstag der Anmeldung: 17.02.2010
(73) Patentinhaber: TRUMPF Werkzeugmaschinen GmbH + Co. KG, 71254 Ditzingen (DE)
(72) Erfinder: SPEKER, Nikolai, 74385 Pleidelsheim (DE); STEGEMANN, Carsten, 46244 Bottrop (DE)
(74) Vertreter: Kohler Schmid Möbus Patentanwälte
(86) Internationale Anmeldenummer: PCT/DE2008/000662
(87) Internationale Veröffentlichungsnummer: WO 2008/141601

(56) Entgegenhaltungen:
- EP-A- 0 507 268
- DE-A1- 4 035 403
- US-A- 4 794 222

## Beschreibung

Die Erfindung betrifft eine Anordnung zur Erkennung einer Laserbearbeitungsdüse beim Einsetzen der Laserbearbeitungsdüse in einen Laserbearbeitungskopf gemäß dem Oberbegriff von Patentanspruch 1.

Eine solche Anordnung ist aus der EP 0 507 268 A bekannt geworden.

Die Erfindung kann bevorzugt eingesetzt werden, wenn Laserbearbeitungsdüsen mithilfe eines Düsenwechslers ausgetauscht werden. Eine Düsenerkennung kann aber auch ohne einen Düsenwechsler sinnvoll sein. Die Erfindung betrifft daher eine Düsenerkennung im allgemeinen.

Das Wechseln von Laserbearbeitungsdüsen an einem Laserbearbeitungskopf einer Laserbearbeitungsmaschine, beispielsweise an einem Laserschweißkopf oder an einem Laserschneidkopf, stellt eine sich wiederholende Tätigkeit dar.

Speziell bei einer 2D-Laserschneidanlage für Bleche kommt dem Laserschneidkopf und somit auch der Schneiddüse eine besondere Bedeutung zu. Um ein optimales Schneidergebnis bei verschiedenen Blechdicken zu erreichen, müssen unterschiedliche Düsen verwendet werden. Bei den bisherigen Laserschneidanlagen können mithilfe automatischer Beladeeinrichtungen Bleche unterschiedlicher Dicke auf die Maschine zur Bearbeitung gelegt werden. Ein Wechsel der Schneiddüse wird mithilfe so genannter Düsenwechsler durchgeführt. Die Vorstufe für einen vollautomatisierten Düsenwechsel ist es, die Erkennung der Laserbearbeitungsdüse durchzuführen. Ein sicherere automatische Düsenerkennung ist eine sinnvolle Ergänzung für den vollautomatisierten Betrieb der Laserbearbeitungsmaschine. Durch eine falsche Bestückung des Düsenmagazins beim mannlosen Betrieb der Laserbearbeitungsmaschine kann es zu erheblichen Unkosten durch Fehlschnitte kommen.

Der Anmelder hat sich die Aufgabe gestellt, eine einfache und sichere Erkennung der montierten Laserbearbeitungsdüse für einen automatisierbaren Laserbearbeitungsdüsenwechsel zu entwickeln.

Diese Aufgabe wird durch eine Anordnung gemäß Patentanspruch 1 gelöst. Weiterbildungen der Erfindung sind in den weiteren Patentansprüchen beschrieben.

Ein Vorteil der Erfindung liegt darin, dass die Kodierung bei der mechanischen Fertigung der Laserbearbeitungsdüse, wie beispielsweise die Laserschneiddüse, als Kontur in die Laserschneiddüse eingebracht werden kann. Die Kodierung kann ohne elektrische und elektronische Komponenten in der Laserschneiddüse arbeiten. Die erfindungsgemäße Kodierung ist besonders einfach zu fertigen und damit besonders kostengünstig. Die Erfassungseinheit kann entweder im Laserbearbeitungskopf oder in einem Düsenmagazin untergebracht sein. Die Erfindung arbeitet störungsunanfällig komplett ohne elektronische Schaltkreise. Kontaktstifte der Anordnung können einzeln ersetzt werden.

Ein Ausführungsbeispiel der Erfindung ist in der Zeichnung schematisch dargestellt und wird nachfolgend mit Bezug zur Figur der Zeichnung näher erläutert. Es zeigt im Einzelnen:
- **Fig. 1**: eine perspektivische Darstellung einer Laserschneidanlage;
- **Fig. 2**: eine Seitenansicht einer Einrichtung zum Wechseln einer Laserschneiddüse an einem Laserschneidkopf der Laserschneidanlage;
- **Fig. 3**: eine Explosionsdarstellung der Einrichtung nach Figur 2;
- **Fig. 4**: einen Längsschnitt der Laserschneiddüse;
- **Fig. 5**: eine perspektivische Darstellung eines Teils der Anordnung zur Erkennung der Laserschneiddüse;
- **Fig. 6**: einen vergrößerten Ausschnitt der Anordnung gemäß Fig. 5;
- **Fig. 7**: eine Draufsicht der Laserschneiddüse.

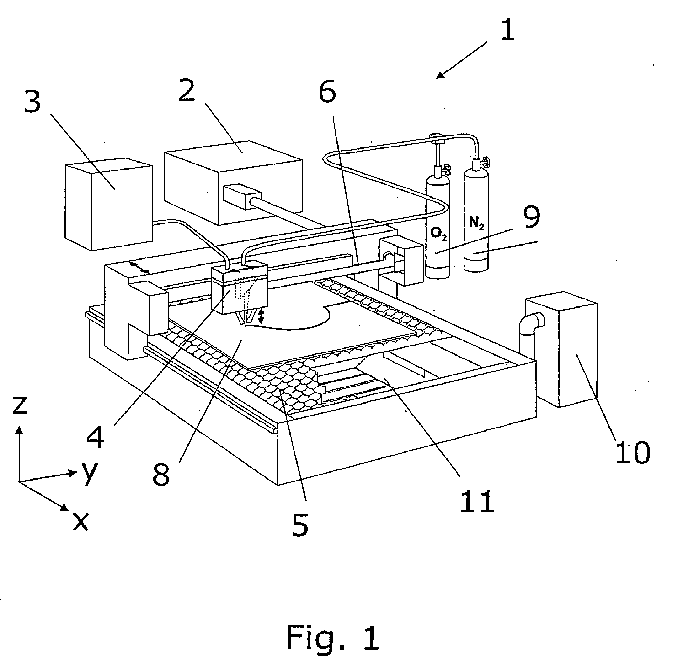

Aus der **Fig. 1** ist der prinzipielle Aufbau einer Laserbearbeitungsanlage **1** zum Laserschneiden mit einem CO₂-Laser **2,** einer Steuereinrichtung **3,** einem Laserbearbeitungskopf **4** und einer Werkstückauflage **5** ersichtlich. Ein erzeugter Laserstrahl **6** wird mithilfe von Umlenkspiegeln zum Laserbearbeitungskopf 4 geführt und auf ein Werkstück **8** gerichtet.

Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Beim Schneiden wird in der Regel mit einem Gasdruck von bis zu 20 bar gearbeitet. Dort, wo der Laserstrahl 6 auf das Blech 8 auftrifft, wird das Material geschmolzen und/oder oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden.

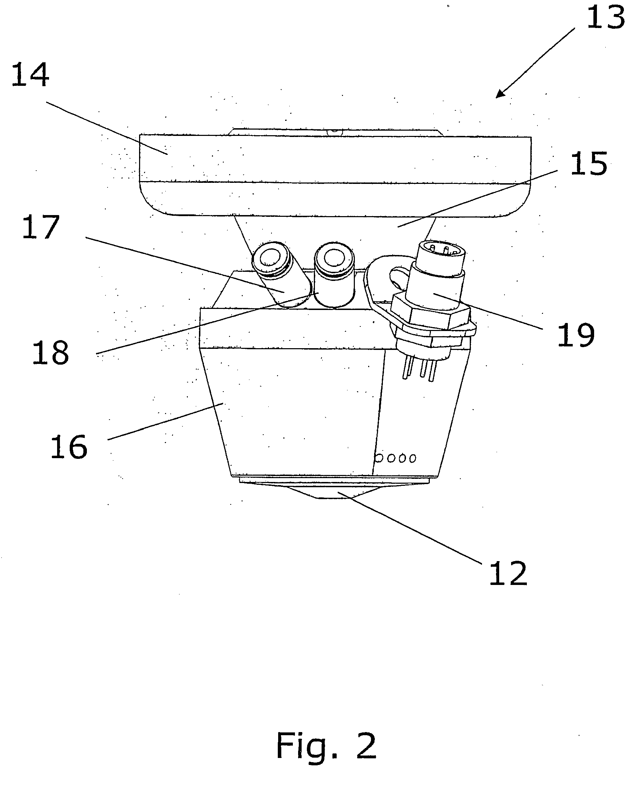

Zum Wechseln einer Laserschneiddüse **12** an dem Laserschneidkopf 4 umfasst der Laserschneidkopf 4 eine Einrichtung **13** gemäß **Fig. 2****.** Die Einrichtung 13 zum Wechseln der Laserschneiddüse 12 kann mithilfe einer Überwurfmutter **14** an dem Laserschneidkopf 4 gemäß Fig. 1 angebracht werden. In die Einrichtung 13 ist ein Dielektrikum **15** für eine bekannte Abstandsregelung integriert. Der Mechanismus zum Wechseln der Laserschneiddüse ist durch ein Außengehäuse **16** abgedeckt. Weiterhin sind in der Fig. 2 ein erster Gasanschluss **17** und ein zweiter Gasanschluss **18** für eine pneumatische Betätigung des Mechanismus zum Wechseln der Laserschneiddüse 12 zu erkennen. Die Betätigung der Ver- und Entriegelung der Laserschneiddüse 12 erfolgt pneumatisch über das ohnehin am Laserschneidkopf 4 verfügbare Prozessgas.

Über den Kontaktstecker **19** können die Kontaktstifte **28** (Fig. 2) mit der Maschinensteuerung verbunden werden. Alternativ dazu sind Kontaktflächen an der Außenseite der Düsenaufnahme denkbar.

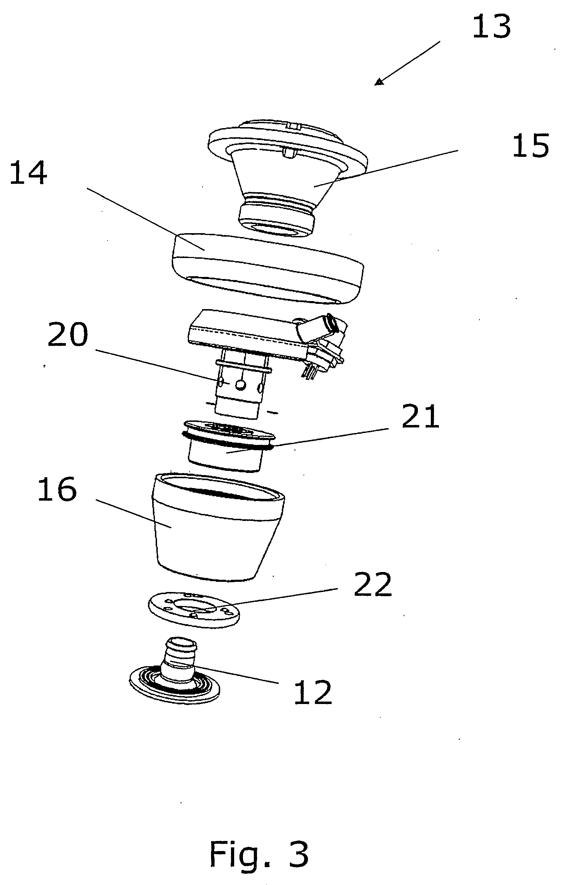

Wie in **Fig. 3** dargestellt, umfasst die Einrichtung 13 eine Überwurfmutter 14 zur lösbaren Befestigung der Einrichtung 13 an einem Laserschneidkopf, ein Dielektrikum 15 für eine Abstandsregelung, einen Kugelkäfig **20** und einen Hubzylinder **21** für einen Wechsel der Laserschneiddüse 12, ein Außengehäuse 16 sowie zusätzlich eine Platine **22** für eine Erkennung der Laserschneiddüse 12. Gegenstand der vorliegenden Erfindung ist die Anordnung zur Erkennung einer bestimmten Laserschneiddüse 12. Daher wird nur diese Anordnung detailliert beschrieben.

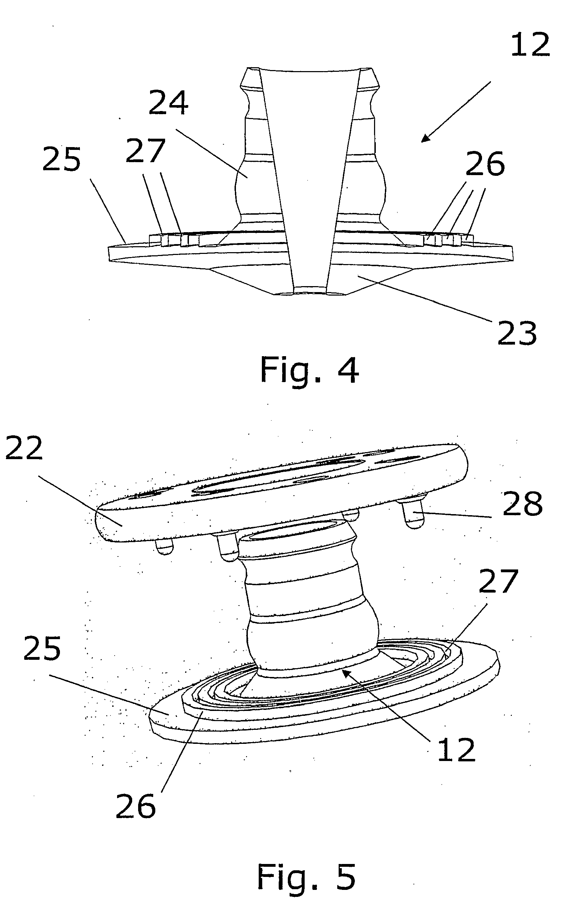

Aus **Fig. 4** ist ersichtlich, dass die Laserschneiddüse 12 einen flachen Düsenkörper **23** und einen Schaft **24** besitzt. An der einem Werkstück bzw dem Prozess abgewandten abgewandten Oberseite **25** sind der Kodierung entsprechende Absätze und Nuten angeordnet (im abgebildeten Beispiel: drei umlaufende Absätze **26,** welche durch Nuten **27** voneinander getrennt sind). Die umlaufende Anordnung der Kodierung ist fertigungstechnisch besonders günstig. Es ist auch sinnvoll, die Kodierung auf der vom Laserbearbeitungsprozess abgewandten Seite anzubringen. Diese Anordnung hat den Vorteil, dass die Kodierung durch die Laserbearbeitung nicht verschmutzt und auch nach einigen Betriebsstunden noch abtastbar ist.

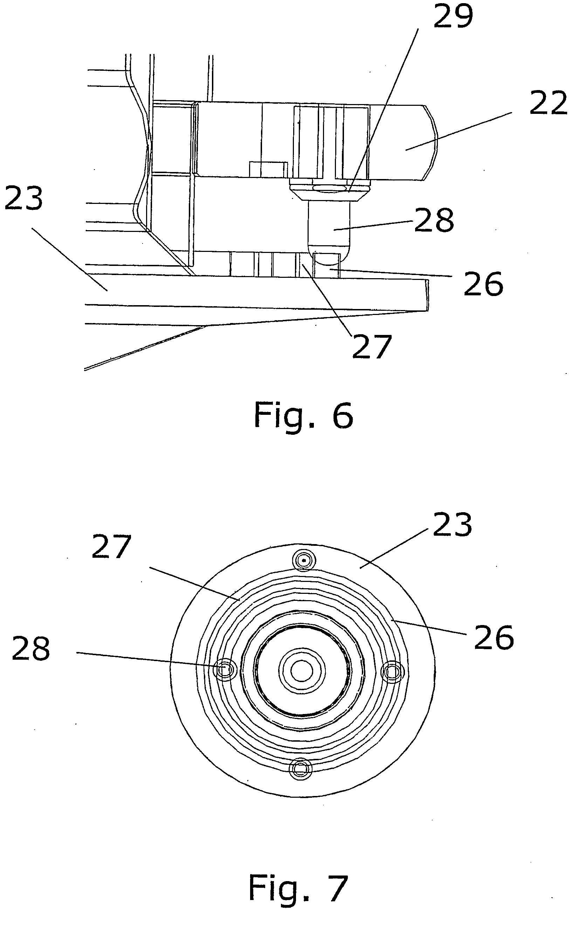

**Fig. 5** zeigt die wesentlichen Komponenten einer Anordnung zur Erkennung der Laserschneiddüse 12. Der Übersichtlichkeit halber sind die Platine 22 und die Oberseite 25 der Laserschneiddüse 12 stark beabstandet dargestellt. Im Betriebszustand besitzen die Kontaktstifte **28** einen Kontakt zu den Absätzen 26, damit die Abtastung der Absätze 26 und der Nuten 27 durchgeführt werden kann. Eine derartige Abtastung ist in der Fig. **6** für einen Kontaktstift 28 beispielhaft gezeigt. Der Kontaktstift 28 ist in einer Hülse **29** federnd gelagert. Beim Einsetzen der Laserschneiddüse 12 in die Einrichtung 13 werden die Absätze 26 gegen die Kontaktstifte 28 gedrückt. Ein derartiger Kontakt löst ein Signal aus, dass an die Steuereinrichtung 3 gemäß Figur 1 übertragen wird. Die Anzahl der Absätze 26 und der Nuten 27 ergibt eine Kodierung. Durch die rotationssymmetrische Ausbildung der Kodierung ist eine definierte Einbaulage der Laserschneiddüse 12 nicht erforderlich. Die Anzahl der Absätze 26 und der Nuten 27 ergibt die Zahl der Kodiermöglichkeiten. Die Kodierung kann einer bestimmten Laserschneiddüse 12 zugeordnet werden. Daraus resultiert die Anzahl der erkennbaren Laserschneiddüsen 12. Beispielsweise können 16 verschiedene Kodiermöglichkeiten erzielt werden, wenn vier Absätze 26 ausgebildet werden.

Die Auswertung eines Kontaktes erfolgt mithilfe der Steuereinrichtung 3. Eine Plausibilitätsabfrage des Signals ist möglich.

Wie aus **Fig. 7** zu erkennen ist, sind insgesamt vier Kontaktstifte 28 der Art versetzt angeordnet, so dass konzentrisch zueinander angeordnete Absätze 26 und Nuten 27 erkannt werden können.

### BEZUGSZEICHENLISTE

- 1: Laserbearbeitungsanlage
- 2: Laser
- 3: Steuereinrichtung
- 4: Laserbearbeitungskopf
- 5: Werkstückauflage
- 6: Laserstrahl
- 7 8: Werkstück
- 9: Schneidgas
- 10: Absaugkammer
- 11: Absaugeinrichtung
- 12: Laserschneiddüse
- 13: Einrichtung zum Wechseln der Laserschneiddüse
- 14: Überwurfmutter
- 15: Dielektrikum
- 16: Außengehäuse
- 17: Gasanschluss
- 18: Gasanschluss
- 19: Kontaktstecker
- 20: Kugelkäfig
- 21: Hubzylinder
- 22: Platine
- 23: Düsenkörper
- 24: Schaft
- 25: Oberseite
- 26: Absatz
- 27: Nut
- 28: Kontaktstift
- 29: Hülse

## Patentansprüche

1. Anordnung zur Erkennung einer Laserbearbeitungsdüse (12) beim Einsetzen in einen Laserbearbeitungskopf (4), umfassend:
einen Laserbearbeitungskopf (4), eine Laserbearbeitungsdüse (12) sowie
Mittel zur Erfassung oder Abtastung einer an einem in einen Laserbearbeitungskopf (4) einsetzbaren Bereich der Laserbearbeitungsdüse (12) gebildeten Kodierung in Form einer Profilierung (26, 27), wobei die Mittel zur Erfassung oder Abtastung in einem für das Einsetzen der Laserbearbeitungsdüse (12) vorgesehenen Aufnahmebereich des Laserbearbeitungskopfes (4) vorgesehen sind, **dadurch gekennzeichnet, dass** die Profilierung zur Erkennung einer bestimmten Laserbearbeitungsdüse (12) aus einer Mehrzahl von Laserbearbeitungsdüsen durch eine Abfolge von Absätzen und Nuten oder durch eine Beschichtung gebildet ist.

2. Anordnung nach Anspruch 1, bei der die Mittel zur Erfassung oder Abtastung in einem Düsenmagazin einer Laserbearbeitungsmaschine (1) vorgesehen sind.

3. Anordnung nach einem der vorhergehenden Ansprüche, **dadurch gekennzeichnet, dass** die Mittel durch Kontaktelemente (28) ausgebildet sind.

4. Anordnung nach Anspruch 3, **dadurch gekennzeichnet, dass** die Kontaktelemente (28) durch federnd gelagerte Kontaktstifte ausgebildet sind.

5. Anordnung nach einem der vorhergehenden Ansprüche, **dadurch gekennzeichnet, dass** die Mittel zur Erfassung oder Abtastung einer an einem Grundkörper (23) der Laserbearbeitungsdüse (12) gebildeten Profilierung (26, 27) ausgebildet sind.

6. Anordnung nach einem der vorhergehenden Ansprüche, **dadurch gekennzeichnet, dass** die Mittel zur Erfassung oder Abtastung einer an der dem Laserbearbeitungsprozess abgewandten Seite der Laserbearbeitungsdüse (12) angeordneten Profilierung (26,27) ausgebildet sind.

7. Anordnung nach einem der vorhergehenden Ansprüche, **dadurch gekennzeichnet, dass** die Mittel zur Erfassung oder Abtastung einer durch eine Abfolge von Absätzen und Nuten oder durch eine Beschichtung gebildeten Profilierung (26, 27) ausgebildet sind.

8. Anordnung nach einem der vorhergehenden Ansprüche, **dadurch gekennzeichnet, dass** die Mittel zur Erfassung oder Abtastung einer rotationssymmetrischen Profilierung (26, 27) ausgebildet sind.

9. Anordnung nach einem der vorhergehenden Ansprüche, **dadurch gekennzeichnet, dass** die Beschichtung eine Isolierschicht oder eine Lackschicht ist.

10. Anordnung nach einem der vorhergehenden Ansprüche, **dadurch gekennzeichnet, dass** die Profilierung (26, 27) rotationssymmetrisch ausgebildet ist.

11. Anordnung nach einem der vorhergehenden Ansprüche, **dadurch gekennzeichnet, dass** die Profilierung (26,27) an der dem Laserbearbeitungsprozess abgewandten Seite angeordnet ist.

12. Anordnung nach einem der vorhergehenden Ansprüche, **dadurch gekennzeichnet, dass** die Profilierung (26, 27) an einer einem Düsenschaft (24) zugewandten Oberseite (25) eines Grundkörpers (23) der Laserbearbeitungsdüse (12) angebracht ist.

## Claims

1. Arrangement for identifying a laser machining nozzle (12) on insertion into a laser machining head (4),
comprising:
a laser machining head (4), a laser machining nozzle (12) as well as
means for detecting or sensing a coding formed on a region of the laser machining nozzle (12) which can be inserted into a laser machining head (4) in the form of a shaping (26, 27), wherein the means for detecting or sensing are provided in a receiving region of the laser machining head (4) provided for insertion of the laser machining nozzle (12), **characterised in that** the shaping for identifying a certain laser machining nozzle (12) from a plurality of laser machining nozzles is formed by a sequence of ridges and grooves or by a coating.

2. Arrangement according to claim 1, wherein the means for detecting or sensing are housed in a nozzle magazine of a laser processing machine (1).

3. Arrangement according to any one of the preceding claims, **characterised in that** the means are formed by contact elements (28).

4. Arrangement according to claim 3, **characterised in that** the contact elements (28) are formed by spring-supported contact pins.

5. Arrangement according to any one of the preceding claims, **characterised in that** the means are designed for detecting or sensing a shaping (26, 27) formed on a base body (23) of the laser machining nozzle (12).

6. Arrangement according to any one of the preceding claims, **characterised in that** the means are designed for detecting or sensing a shaping (26, 27) arranged on the side of the laser machining nozzle (12) facing away from the laser machining process.

7. Arrangement according to any one of the preceding claims, **characterised in that** the means are designed for detecting or sensing a shaping (26, 27) formed by a sequence of ridges and grooves or by a coating.

8. Arrangement according to any one of the preceding claims, **characterised in that** the means are designed for detecting or sensing a rotationally symmetrical shaping (26, 27).

9. Arrangement according to any one of the preceding claims, **characterised in that** the coating is an insulating layer or a coat of lacquer.

10. Arrangement according to any one of the preceding claims, **characterised in that** the shaping (26, 27) is of rotationally symmetrical construction.

11. Arrangement according to any one of the preceding claims, **characterised in that** the shaping (26, 27) is arranged on the side remote from the laser machining process.

12. Arrangement according to any one of the preceding claims, **characterised in that** the shaping (26, 27) is formed on an upper side (25), which faces the nozzle shaft (24), of a base body (23) of the laser machining nozzle (12).

## Revendications

1. Dispositif pour reconnaître une buse d'usinage au laser (12) lorsque celle-ci est introduite dans une tête d'usinage au laser (4),
comprenant :
une tête d'usinage au laser (4), une buse d'usinage au laser (12) ainsi que des moyens de reconnaissance ou de palpage d'un codage sous la forme d'un profilage (26, 27) formé sur une zone de la buse d'usinage au laser (12) pouvant être introduite dans une tête d'usinage au laser (4), les moyens de reconnaissance ou de palpage étant prévus dans une zone de réception de la tête d'usinage au laser (4) prévue pour l'introduction de la buse d'usinage au laser (12),
**caractérisé en ce que** le profilage permettant de reconnaître une buse d'usinage au laser (12) donnée parmi une pluralité de buses d'usinage au laser est formé par une suite de saillies et de rainures ou par un revêtement.

2. Dispositif selon la revendication 1, dans lequel les moyens de reconnaissance ou de palpage sont prévus dans un magasin à buses d'une machine d'usinage au laser (1).

3. Dispositif selon l'une des revendications précédentes, **caractérisé en ce que** les moyens sont formés par des éléments de contact (28).

4. Dispositif selon la revendication 3, **caractérisé en ce que** les éléments de contact (28) sont formés par des broches de contact montées sur ressort.

5. Dispositif selon l'une des revendications précédentes, **caractérisé en ce que** les moyens sont conçus pour reconnaître ou palper un profilage (26, 27) formé sur un corps de base (23) de la buse d'usinage au laser (12).

6. Dispositif selon l'une des revendications précédentes, **caractérisé en ce que** les moyens sont conçus pour reconnaître ou palper un profilage (26, 27) disposé du côté de la buse d'usinage au laser (12) éloigné du processus d'usinage au laser.

7. Dispositif selon l'une des revendications précédentes, **caractérisé en ce que** les moyens sont conçus pour reconnaître ou palper un profilage (26, 27) formé par une suite de saillies et de rainures ou par un revêtement.

8. Dispositif selon l'une des revendications précédentes, **caractérisé en ce que** les moyens sont conçus pour reconnaître ou palper un profilage (26, 27) à symétrie de révolution.

9. Dispositif selon l'une des revendications précédentes, **caractérisé en ce que** le revêtement est une couche isolante ou une couche de vernis.

10. Dispositif selon l'une des revendications précédentes, **caractérisé en ce que** le profilage (26, 27) est conçu à symétrie de révolution.

11. Dispositif selon l'une des revendications précédentes, **caractérisé en ce que** le profilage (26, 27) est disposé du côté éloigné du processus d'usinage au laser.

12. Dispositif selon l'une des revendications précédentes, **caractérisé en ce que** le profilage (26, 27) est appliqué sur un côté supérieur (25) d'un corps de base (23) de la buse d'usinage au laser (12) tourné vers une queue de buse (24).
